(19) Europäisches Patentamt / European Patent Office / Office européen des brevets

(11) **EP 2 304 488 B1**

(12) **FASCICULE DE BREVET EUROPEEN**

(45) Date de publication et mention
de la délivrance du brevet:
**27.11.2013 Bulletin 2013/48**

(21) Numéro de dépôt: **09769543.1**

(22) Date de dépôt: **26.06.2009**

(51) Int Cl.:
*G02B 21/24* (2006.01)     *G02B 26/04* (2006.01)
*G02B 26/06* (2006.01)     *G01N 21/63* (2006.01)
*G01N 21/17* (2006.01)     *G01N 21/65* (2006.01)

(86) Numéro de dépôt international:
**PCT/FR2009/051236**

(87) Numéro de publication internationale:
**WO 2009/156702 (30.12.2009 Gazette 2009/53)**

(54) **PROCÉDÉ ET SYSTÈME DE MICROSCOPIE NON-LINÉAIRE COHÉRENTE À MODULATION DE VOLUME FOCAL POUR SONDER LA NANOSTRUCTURATION DE MATÉRIAUX ORGANISÉS**

KOHÄRENTES NICHTLINEARES MIKROSKOPIESYSTEM UND VERFAHREN MIT VARIATION DES FOKALVOLUMENS, UM DIE NANOSTRUKTUR VON ORGANISIERTEN MATERIALIEN ZU SONDIEREN

COHERENT NONLINEAR MICROSCOPY SYSTEM AND METHOD WITH VARIATION OF THE FOCAL VOLUME IN ORDER TO PROBE THE NANOSTRUCTURE OF ORGANIZED MATERIALS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.06.2008 FR 0854347**

(43) Date de publication de la demande:
**06.04.2011 Bulletin 2011/14**

(73) Titulaire: **Ecole Polytechnique**
**91128 Palaiseau Cedex (FR)**

(72) Inventeurs:
• **BEAUREPAIRE, Emmanuel, Jean-Marc**
**F-91120 Palaiseau (FR)**

• **OLIVIER, Nicolas**
**F-75004 Paris (FR)**
• **DEBARRE, Delphine**
**F-75014 Paris (FR)**
• **SCHANNE-KLEIN, Marie-Claire**
**F-91370 Verrières Le Buisson (FR)**
• **MARTIN, Jean Louis**
**F-91440 Bures Sur Yvette (FR)**

(74) Mandataire: **Pontet Allano & Associes**
**Parc Orsay Université**
**25, rue Jean-Rostand**
**91893 Orsay Cedex (FR)**

(56) Documents cités:
**EP-A- 1 617 206     DE-A1- 19 733 193**
**US-A1- 2006 017 001**

# Description

La présente invention est relative à un procédé en microscopie non-linéaire cohérente pour caractériser un matériau structuré. Elle concerne également un système mettant en oeuvre un tel procédé.

Elle trouve une application particulièrement intéressante dans le domaine de la caractérisation des matériaux structurés artificiels ou biologiques tels que : arrangements ordonnés de collagène (cornée, os, ...), fibres musculaires, structures biominérales, etc. La présente invention peut notamment être utilisée dans le cadre d'un diagnostic de défauts de nanomatériaux, ou de pathologies caractérisées par la désorganisation de tels matériaux.

Dans l'art antérieur, pour sonder la structuration de matériaux épais organisés à l'échelle nanométrique (20nm - 1 $\mu$m), on a recours à des approches telles que la microscopie électronique, la diffusion des rayons X, ou la microscopie à force atomique, qui imposent des contraintes de préparation et de géométrie des échantillons, et notamment qui ne sont pas compatibles avec l'étude de tissus biologiques vivants.

On connaît également la microscopie optique non linéaire de structures organisées. Il a été montré que certaines structures organisées peuvent être détectées en microscopie non linéaire. Notamment, la microscopie SHG (« Second Harmonic Generation » en langue anglaise) permet de détecter le collagène fibrillaire, les fibres musculaires, etc. Cependant l'approche actuelle selon l'art antérieur ne donne pas accès aux paramètres de structures (périodicité, paramètres d'ordre) à l'échelle sub-micrométrique.

On connaît également par ailleurs la microscopie non linéaire avec modulation de volume focal. A ce jour, deux applications de la microscopie non linéaire cohérente avec modulation de volume focal ont été proposées :

- le document Yew et al., "Second harmonic generation polarization microscopy with tightly focused linearly and radially polarized beams", E.Y.S. Yew & C.J.R. Sheppard, Optics Commun. 275, 453 (2007), décrit une microscopie permettant de créer un volume focal avec une forte polarisation axiale en microscopie SHG pour détecter une fibre de collagène orientée axialement, dans la mesure où généralement, une fibre de collagène dans cette orientation donne peu de signal ;
- le document Krishnamachari et al., "Imaging chemical interfaces perpendicular to the optical axis with focus-engineered coherent anti-Stokes Raman scattering microscopy", V.V. Krishnamachari & E.O. Potma, Chemical Physics (2007), décrit une méthode pour créer un volume focal antisymétrique permettant « d'éteindre » un fond homogène en microscopie CARS, de façon à faire ressortir les petits objets et les interfaces. Les documents Yew et Krishnamachari ne décrivent pas une méthode visant à obtenir une information de structuration sub-micrométrique.

La présente invention a pour but la mesure de paramètres sub-microniques d'un matériau structuré de façon non invasive. Un autre but de l'invention est une mesure tridimensionnelle de la structure d'un matériau. La présente invention a encore pour but une méthode non complexe pour caractériser un matériau structuré.

On atteint au moins l'un des objectifs précités avec un procédé de caractérisation dimensionnelle d'un matériau structuré, dans lequel procédé :

- on génère un faisceau laser d'excitation adapté à la microscopie non linéaire cohérente et dont le front d'onde présente un profil spatial qui est mis en forme (intensité, phase, polarisation) par un dispositif de modulation; ce faisceau laser d'excitation étant focalisé dans un volume focal au sein du matériau structuré ;
- on détecte des signaux émis par le matériau structuré ;
- on élabore une pluralité de diagrammes d'émission correspondant chacune à une forme particulière du volume focal ; les formes particulières étant obtenues pour différents profils spatiaux non gaussien du front d'onde du faisceau laser d'excitation ; et
- à partir des diagrammes d'émission ainsi élaborés, on en déduit des caractéristiques dimensionnelles dudit matériau structuré.

La présente invention est une nouvelle méthode optique de caractérisation non destructive de matériaux tridimensionnels structurés artificiels ou biologiques, et fournissant un signal en microscopie non linéaire cohérente, à des échelles allant de quelques dizaines à quelques centaines de nanomètres. La présente invention va à l'encontre d'un préjugé généralement admis selon lequel, en microscopie optique, la mesure des distances nanométriques est quasi impossible. Jusqu'à présent on utilisait plutôt la microscopie électronique à balayage ou les rayons X. Le faisceau laser d'excitation selon l'invention est généralement un train d'impulsion picoseconde ou femtoseconde.

Avec le procédé selon l'invention, on sonde la structure nanométrique du matériau structuré, qui plus est, de façon non invasive. On peut avantageusement focaliser le faisceau laser d'excitation dans le matériau structuré *in situ,* on peut aussi le faire *in vivo,* ce qui n'est pas le cas de la plupart des méthodes de l'art antérieur.

Par ailleurs, les méthodes alternatives de l'art antérieur sont soit limitées à deux dimensions (microscopie à force atomique AFM), ou bien reposent sur des rayonnements à plus courte longueur d'onde (microscopie électronique, rayons X). Elles sont beaucoup plus contraignantes en termes de préparation d'échantillon, et notamment ne s'appliquent pas à l'imagerie tridimensionnelle de tissus biologiques intacts, d'échantillons épais, ou de milieux hydratés. Au contraire la présente invention peut avantageusement s'appliquer par exemple à des diagnostics de l'état d'organisation de biomatériaux (cornée, etc) ou de matériaux nanostructurés, *in situ,* en trois dimensions, et sans préparation. En particulier, le procédé selon l'invention est compatible avec les échantillons aqueux et épais.

Par rapport au document yew, le procédé selon la présente invention utilise à chaque mesure un profil spatial non gaussien différent. La série de diagrammes d'émission réalisés permet d'en déduire les caractéristiques structurales du matériau observé.

A titre d'exemple non limitatif, les caractéristiques dimensionnelles ou structurales comprennent au moins un élément du groupe suivant : périodicité, distance, et angle. L'homme du métier comprendra aisément que d'autres caractéristiques peuvent être déterminées en fonction des matériaux observés et des profils spatiaux utilisés.

Selon une caractéristique avantageuse de l'invention, les différents profils spatiaux comprennent des profils de phase concentriques à symétrie radiale, qui peuvent être de type Laguerre-Gaussien, Bessel ou « bottle beam » par exemple.

D'autres types de profils spatiaux peuvent être utilisés, notamment des profils de phase antisymétriques radialement, tels que par exemple de type Hermite-Gaussien.

Chaque profil est obtenu par une mise en forme du front d'onde en phase et ou en intensité du faisceau laser d'excitation. Pratiquement, on peut utiliser un modulateur spatial de lumière. A titre d'exemple non limitatif ce modulateur spatial de lumière peut être :

- une lame de phase ou plusieurs lames de phase que l'on place sur une roue rotative ; chaque lame correspondant à une mise en forme prédéterminée ; on réalise ainsi plusieurs diagrammes d'émission pour les différentes lames de phase ;
- une matrice à cristaux liquides;
- un miroir déformable ; ou
- une combinaison de ceux-ci.

En d'autres termes, chaque volume focal correspond à un profil spatial donné qui est obtenu en modifiant la phase du faisceau laser d'excitation et ou en modifiant l'intensité du faisceau laser d'excitation. Par ailleurs, on peut également modifier la polarisation du faisceau laser d'excitation de façon à posséder un plus grand nombre de variables dans les diagrammes d'émission. Dans le même esprit, on peut en outre élaborer différents diagrammes d'émission pour différentes longueurs d'ondes.

Selon une caractéristique avantageuse de l'invention, on élabore un diagramme de détection à partir de signaux émis vers l'arrière par le matériau structuré. En d'autres termes, il s'agit d'une épidétection. L'émission vers l'arrière peut résulter soit de la mise en forme du volume focal, soit de la rétrodiffusion d'une partie du rayonnement par le matériau épais.

On peut également élaborer un diagramme de détection à partir de signaux en transmission sortant en aval du matériau structuré, c'est-à-dire les signaux non retro-diffusés par le matériau structuré. Généralement, on parle d'émission en avant pour la transmission et d'émission en arrière pour la retro-diffusion. Avantageusement, avec le procédé selon l'invention, on peut modifier le profil spatial de façon à jouer sur le rapport d'émission avant/arrière et enrichir efficacement l'analyse des diagrammes d'émission. Plus précisément, on peut déterminer une efficacité d'émission avant/arrière que l'on utilise ensuite comme critère de comparaison lors de la déduction des caractéristiques dimensionnelles. Notamment, pour un même profil spatial, on peut réaliser à la fois une détection de signaux rétrodiffusés et de signaux en transmission du matériau structuré.

Pour la détection des signaux émis par le matériau structuré, on peut utiliser un détecteur de type monopoint avec ou sans filtre spatial ou bien de manière générale une caméra. Dans ce dernier cas, on capte tout le signal provenant du matériau structuré sans privilégier une quelconque direction.

Selon un mode de mise en oeuvre avantageux de l'invention, on réalise la déduction des caractéristiques dimensionnelles en comparant les diagrammes d'émissions ainsi élaborés avec des modèles numériques prédéterminés. Ces modèles numériques peuvent être obtenus au cours d'une étape d'étalonnage dans laquelle on a placé un matériau structuré « témoin » pour lequel on connaît les caractéristiques dimensionnelles.

Selon une variante de l'invention, on réalise un balayage du faisceau laser d'excitation sur ou dans le matériau structuré.

Selon un autre aspect de l'invention, il est proposé un système de caractérisation dimensionnelle d'un matériau structuré pour la mise en oeuvre du procédé tel que décrit ci-dessus. Ce système comprend :

- une source laser apte à générer un faisceau laser d'excitation adapté à la microscopie non linéaire cohérente ;
- un modulateur spatial de lumière pour modifier le profil spatial du front d'onde du faisceau laser d'excitation en un profil spatial non gaussien ;
- un objectif pour focaliser ce faisceau laser d'excitation dans un volume focal au sein du matériau structuré ;
- un détecteur pour détecter des signaux émis par le matériau structuré ; et
- une unité de traitement pour élaborer une pluralité de diagrammes d'émission correspondant chacune à une forme particulière du volume focal ; les formes particulières étant obtenues pour différents profils spatiaux non gaussien du front d'onde du faisceau laser d'excitation ; et pour déduire des caractéristiques dimensionnelles dudit matériau structuré à partir des diagrammes d'émission ainsi élaborés.

Avantageusement, le détecteur est disposé de façon à détecter les signaux émis vers l'arrière ou rétro-diffusés par le matériau structuré. Ce détecteur peut également être disposé de façon à détecter les signaux en transmission sortant en aval du matériau structuré. De préférence, le système comprend un dispositif de balayage pour faire balayer le faisceau laser d'excitation sur ou dans le matériau structuré.

D'autres avantages et caractéristiques de l'invention apparaîtront à l'examen de la description détaillée d'un mode de mise en oeuvre nullement limitatif, et des dessins annexés, sur lesquels :

La figure 1 est une vue simplifiée illustrant trois paramètres constitutifs de l'invention ;
La figure 2 est une vue simplifiée illustrant un volume focal dans un matériau structuré ;
La figure 3 est une vue simplifiée illustrant la conversion d'un front d'onde ;
La figure 4 est une vue schématique d'un système selon l'invention ;
La figure 5 est une vue simplifiée illustrant des signaux en rétrodiffusion et en transmission ;
La figure 6 est une vue illustrant différents types de profils spatiaux ;
La figure 7 est un graphique décrivant l'efficacité d'émission THG (« Third Harmonic Generation ») vers l'arrière par un matériau nanostructuré sondé avec différents profils d'excitation, en fonction de la taille caractéristique du matériau ; et
La figure 8 est un graphique décrivant l'efficacité d'émission THG (« Third Harmonic Generation ») vers l'avant par un matériau microstructuré sondé avec différents profils d'excitation, en fonction de la taille caractéristique du matériau;

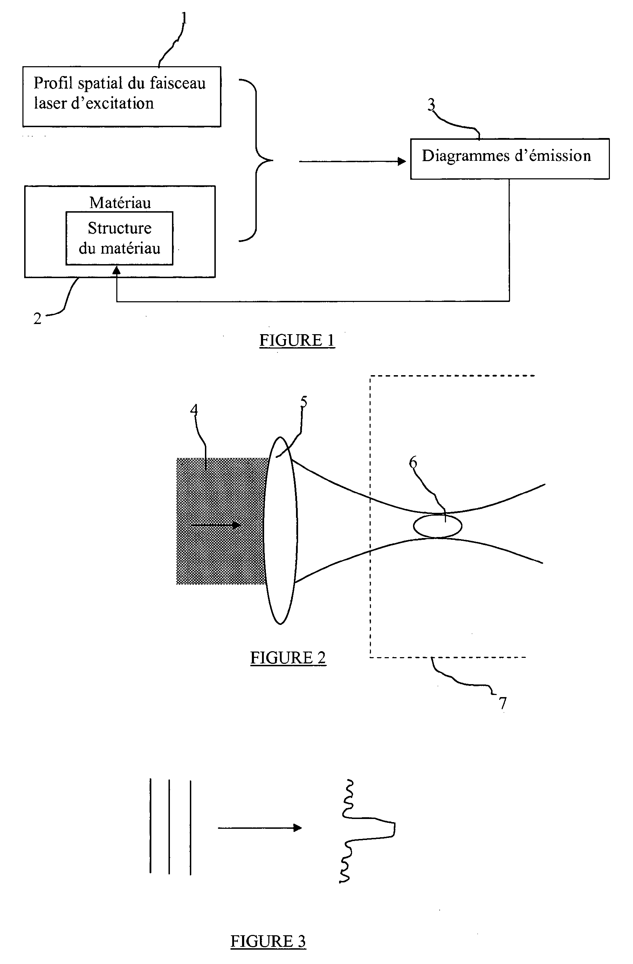

Le principe de mise en oeuvre du procédé selon l'invention est illustré sur la figure 1. On distingue trois paramètres inscrits dans trois cadres. Le paramètre 1 « profil spatial du faisceau laser d'excitation » est en fait une variable que l'on peut modifier. Le paramètre 2 « structure du matériau » est le paramètre que l'on cherche à caractériser qui est donc présent dans le matériau mais inconnu. Le paramètre 3 « diagrammes d'émission » est une donnée à partir de laquelle on en déduit le paramètre 2 « structure du matériau ». Idéalement, on réalise plusieurs diagrammes d'émission pour différents profils spatiaux, puis on compare ces diagrammes d'émission à des modèles numériques prédéterminés.

La présente invention utilise, en plus d'autres caractéristiques, la microscopie non-linéaire cohérente à modulation de volume focal pour sonder une structure nanométrique d'un matériau au moyen de profils spatiaux non gaussien.

D'une façon générale, la microscopie non linéaire cohérente permet d'obtenir des images de matériaux polarisables, possédant une susceptibilité non linéaire d'ordre deux ou d'ordre trois non nulle. Le mécanisme de contraste repose sur l'interaction entre un train d'impulsions focalisées (laser femtoseconde ou picoseconde) et le milieu observé, dans un volume confiné au voisinage du point de focalisation du laser. Sur la figure 2, on voit un faisceau laser 4 que l'on focalise au moyen d'un objectif 5 en un volume focal 6 au sein d'un matériau structuré 7. Ce volume focal 6 peut avoir la forme d'un ovoïde de largeur $1.5\mu$m et de hauteur $0.4\mu$m par exemple. Une image est alors produite en balayant le point de focalisation en deux ou trois dimensions. Les effets optiques utilisables comportent notamment la génération de second harmonique (SHG), la génération de troisième harmonique (THG), la diffusion Raman anti-Stokes cohérente (CARS), la génération de somme de fréquences (SFG), la génération de différence de fréquences (DFG), la diffusion Raman stimulée impulsive (ISRS), la diffusion Raman Stokes cohérente (CSRS), etc. Dans ce type de microscopie, le signal détecté est la superposition cohérente au niveau du détecteur des ondes rayonnées par les dipôles induits au sein du volume d'excitation.

La présente invention a pour objet de réaliser plusieurs diagrammes d'émission en modifiant le profil spatial du faisceau laser d'excitation 4. Sur la figure 3, on voit un exemple de modification d'un profil plan vers un profil donné. Le profil donné est choisit parce que l'on sait par expérience ou par étalonnage notamment qu'un tel profil permet de mettre en exergue certaines caractéristiques dimensionnelles du matériau observé. La présente invention est ainsi remarquable par le fait que la variation du profil spatial du faisceau laser modifie le diagramme d'émission ; ces modifications étant liées aux caractéristiques nanométriques du matériau structuré.

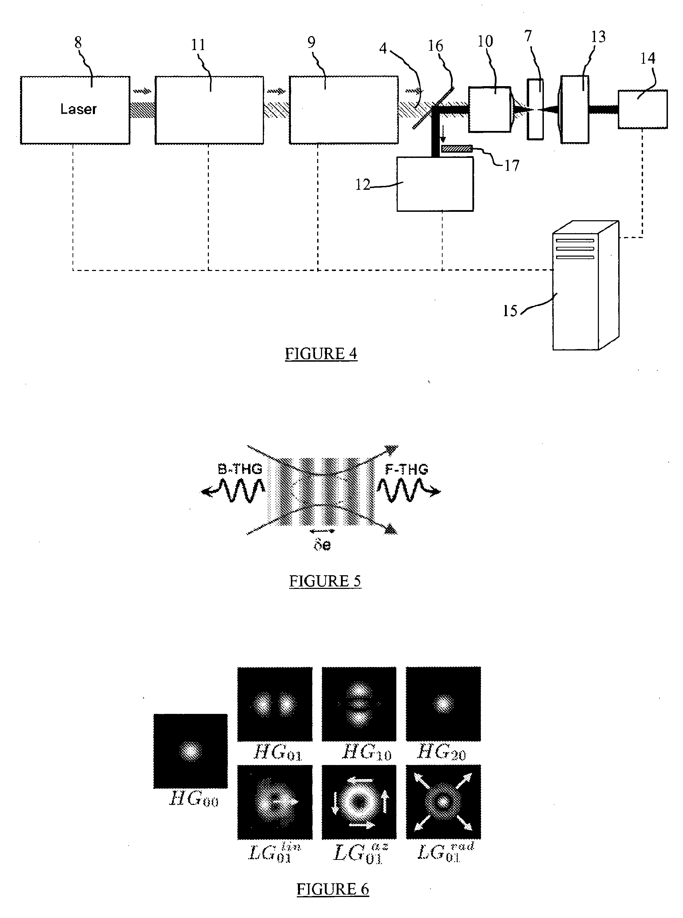

Sur la figure 4 est décrit un système selon l'invention pour caractériser le matériau structuré. Ce système comprend un microscope non linéaire composé :

- d'une source laser impulsionnelle 8 appropriée pour la microscopie linéaire, c'est-à-dire une émission d'un train d'impulsions picoseconde ou femtoseconde à forte cadence ou émission d'un ou deux faisceaux de longueur d'onde centrale accordable ;
- d'un dispositif de balayage 9 du faisceau d'excitation 4 ; alternativement, ce dispositif de balayage peut être remplacé par un dispositif de balayage (non représenté) du matériau structuré 7, dans ce cas le faisceau laser d'excitation peut rester fixe ; et
- d'un objectif 10 pour focaliser le faisceau laser d'excitation 4 dans le matériau structuré 7.

Le système comprend en outre avantageusement un modulateur spatial de lumière 11 pour la mise en forme spatiale du front d'onde du faisceau laser d'excitation 4. Ce modulateur spatial de lumière peut être un modulateur de phase et éventuellement d'amplitude (intensité).

Le système comprend également un détecteur 12 de type monopoint ou résolu spatialement pour détecter la lumière (signal) émise par le matériau structuré 7 et collectée par l'objectif 10 via un séparateur 16. Un condenseur 13 et un second détecteur 14 constituent une seconde voie optionnelle de détection permettant de détecter la lumière émise dans une autre direction, si la géométrie du matériau structuré s'y prête. Pour certaines applications, les deux voies de détection peuvent être utilisées simultanément. Une unité de traitement 15 reliée notamment à la source laser 8, au modulateur spatial de lumière 11, au dispositif de balayage 9 et aux détecteurs 12 et 14, permet de piloter ces différents éléments auxquels elle est reliée, de récupérer des diagrammes d'émission et d'en déduire des caractéristiques structurelles du matériau structuré 7.

Le système de la figure 4 combine donc notamment un système de microscopie non linéaire comportant un microscope à balayage et un laser femtoseconde accordable en longueur d'onde notamment, à un dispositif de mise en forme spatiale du front d'onde avec en outre la réalisation d'une pluralité de diagrammes d'émission pour différentes formes spatiales non gaussienne du front d'onde, et ce pour déduire desdits diagrammes d'émission des caractéristiques structurelles d'un matériau.

Avec la microscopie non linéaire cohérente (microscopie par génération de second harmonique (SHG), microscopie par génération de troisième harmonique (THG), microscopie CARS, etc), l'émission de la lumière qui est détectée pour former l'image se fait dans des directions qui sont déterminées d'une part par la géométrie du matériau structuré 7 à l'échelle sub-micrométrique, et d'autre part par la distribution du champ lumineux au voisinage du foyer de l'objectif 10. Classiquement, le faisceau excitateur est un faisceau Gaussien, et l'émission se fait en général dans la direction de propagation de ce faisceau. Mais dans la présente invention, on modifie les angles d'émission et/ou les directions d'émission, en particulier le rapport avant/arrière, ainsi que l'intensité d'émission, en modifiant la distribution du champ au foyer de l'objectif par l'utilisation d'un faisceau non Gaussien. Ceci peut être effectué en contrôlant le profil spatial du faisceau à l'entrée de l'objectif 10 à l'aide du modulateur spatial de lumière 11. Dans le cas d'un matériau organisé présentant une structure nanométrique répétée de façon pseudo-périodique sur une longueur de l'ordre du micromètre, l'enregistrement par l'unité de traitement 15 de plusieurs signaux ou diagrammes d'émission obtenus avec des formes de faisceaux différents permet de déduire les longueurs caractéristiques ou les paramètres d'ordre du matériau structuré 7, à une échelle inférieure à la longueur d'onde. En effet, l'intensité de signal émis dans une direction donnée, par exemple vers l'arrière, va dépendre du profil spatial de l'excitation et de la distribution des longueurs caractéristiques à sonder.

En imagerie, avec un tel système selon l'invention, le temps de traitement par pixel peut être de quelques $\mu$s.

Avec le système selon l'invention, on contrôle donc la distribution tridimensionnelle du champ excitateur dans le volume focal via l'intensité, la phase et éventuellement la polarisation ; les phénomènes d'interférences constructives ou destructives permettant de favoriser l'émission dans une direction particulière, par exemple vers l'arrière plutôt que vers l'avant. Sur la figure 5, on voit le volume focal 6, au voisinage du point de focalisation du faisceau d'excitation 4, au sein du matériau structuré 7 de période caractéristique $\delta$e. Le signal B-THG (pour « Backward-THG ») représente l'émission THG (génération de troisième harmonique) vers l'arrière, c'est-à-dire une épidétection qui peut être détectée par le détecteur 12. Le signal F-THG (pour « Forward-THG ») représente l'émission THG (génération de troisième harmonique) vers l'avant, c'est-à-dire une émission qui peut être détectée par le second détecteur 14.

Dans le cas d'un matériau présentant une structuration périodique s'étendant sur environ un à deux microns le long de l'axe optique, l'efficacité d'émission avant/arrière dépend fortement de la distribution axiale du champ excitateur au sein du volume focal. Comme on l'a vu, cette distribution peut être contrôlée en modifiant le profil spatial du faisceau laser d'excitation en amont de l'objectif 10. On peut notamment utiliser des profils de phase concentriques à symétrie radiale tels que Laguerre-Gaussien, Bessel, « bottle beam », etc. Sur la figure 6 on voit trois exemples de profils de phase du type Laguerre-Gaussien : $LG_{01}^{lin}, LG_{01}^{az}, LG_{01}^{rad}$.

En enregistrant le signal ou son profil spatial d'émission pour plusieurs formes du faisceau laser d'excitation 4, on peut ainsi mesurer une périodicité ou un paramètre d'ordre du matériau structuré 7.

De même, pour un matériau présentant une structuration latérale (interface ou milieu périodique) sub-micrométrique, la direction et l'efficacité de l'émission sont contrôlées par la structuration latérale du volume focal, qui peut être modifiée en utilisant un profil de faisceau brisant la symétrie radiale tel que Hermite-Gaussien, ou autre. Sur la figure 6, on voit quatre exemples de profils de phase du type Hermite-Gaussien : $HG_{00}HG_{01}$, $HG_{10}$, $HG_{20}$. Il est ainsi possible de déduire des grandeurs caractéristiques latérales telles que la périodicité, la distance, et l'angle, à l'échelle sub-micrométrique en enregistrant le diagramme d'émission pour plusieurs formes du volume d'excitation. Selon les contraintes liés au matériau structuré 7, la mesure peut se faire soit en épidétection sur un détecteur monopoint tel que le détecteur 12 par exemple avec éventuellement un filtre spatial 17 sur la figure 4; soit en épidétection sur un imageur, une caméra (non représentée); soit en combinant épidétection et détection en transmission (détecteurs 12 et 14).

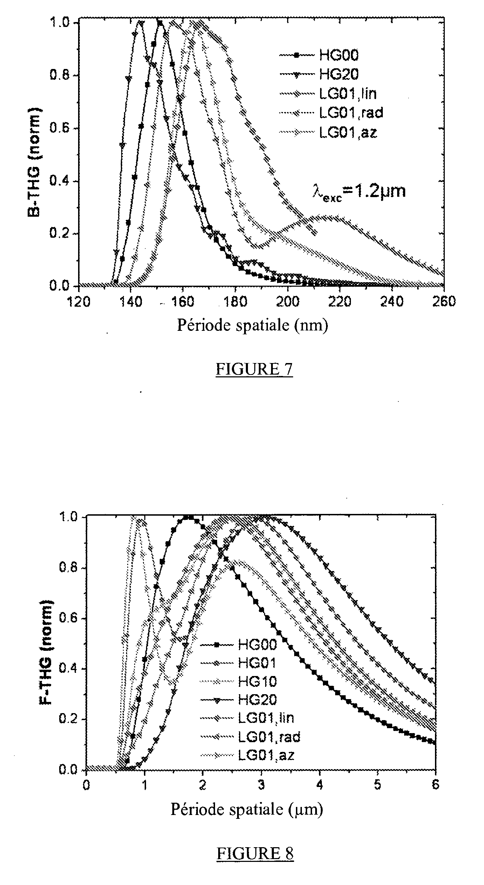

Les figures 7 et 8 sont des efficacités d'émission en fonction de la longueur caractéristique d'un matériau périodique, pour chaque profil spatial tel qu'illustré sur la figure 6. Ces efficacités d'émission illustrent la sensibilité de l'émission à la forme du volume focal, pour un matériau structuré orienté le long de l'axe optique. Ces diagrammes correspondent à une émission THG vers l'arrière (B-THG) et vers l'avant (F-THG) par une structure périodique excitée à 1200nm. La mesure de ces signaux émis pour différentes mises en forme spatiales permet de caractériser des longueurs caractéristiques dans la plage 140-240nm et 0.7-7$\mu$m. D'autres périodicités peuvent être sondées en changeant la longueur d'onde d'excitation, par exemple 600 à 1600 nm, et la forme du faisceau excitateur : Laguerre-Gaussien, Bessel, profils de phase concentriques à symétrie radiale, notamment «bottle beam», etc.

L'invention concerne donc une méthode optique de caractérisation de matériaux structurés et fournissant un signal en microscopie non linéaire cohérente, à des échelles allant de quelques dizaines à quelques centaines de nanomètres. Elle s'applique avantageusement à des applications relatives à la caractérisation des matériaux structurés artificiels ou biologiques. De telles applications comprennent notamment :

- la caractérisation des arrangements ordonnés de collagène : cornée, os...
- la caractérisation des structures musculaires,
- la caractérisation des structures biominérales : biocristaux, spicules, etc,
- le diagnostic de pathologies caractérisées par une désorganisation dans ce type de structures, telles que : dystrophie de la cornée, oedème, dystrophie musculaire, etc,
- la caractérisation des matériaux en couches minces,
- la caractérisation des microcavités, matériaux nanostructurés, ... et
- la caractérisation des métamatériaux.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de caractérisation dimensionnelle d'un matériau structuré (7), dans lequel procédé :

   - on génère un faisceau laser d'excitation adapté à la microscopie non linéaire cohérente et dont le front d'onde présente un profil spatial qui est mis en forme par un dispositif de modulation (11); ce faisceau laser d'excitation étant focalisé dans un volume focal au sein du matériau structuré ;
   - on détecte des signaux émis par le matériau structuré ;
   - on élabore une pluralité de diagrammes d'émission correspondant chacune à une forme particulière du volume focal ; les formes particulières étant obtenues pour différents profils spatiaux non gaussiens du front d'onde du faisceau laser d'excitation ; et
   - à partir des diagrammes d'émission ainsi élaborés, on en déduit des caractéristiques dimensionnelles dudit matériau structuré.

2. Procédé selon la revendication 1, **caractérisé en ce qu'**on modifie le profil spatial en modifiant la phase du faisceau laser d'excitation.

3. Procédé selon la revendication 1 ou 2, **caractérisé en ce qu'**on modifie le profil spatial en modifiant l'intensité du faisceau laser d'excitation.

4. Procédé selon l'une quelconque des revendications 1 à 3, **caractérisé en ce qu'**on modifie le profil spatial en modifiant la polarisation du faisceau laser d'excitation.

5. Procédé selon l'une quelconque des revendications précédentes, **caractérisé en ce qu'**on élabore un diagramme de détection à partir de signaux émis vers l'arrière ou rétrodiffusés par le matériau structuré.

6. Procédé selon l'une quelconque des revendications précédentes, **caractérisé en ce qu'**on élabore un diagramme de détection à partir de signaux en transmission sortant en aval du matériau structuré.

7. Procédé selon l'une quelconque des revendications précédentes, **caractérisé en ce que**, pour un même profil spatial, on réalise à la fois une détection de signaux émis vers l'arrière ou rétrodiffusés et de signaux en transmission du matériau structuré.

8. Procédé selon l'une quelconque des revendications précédentes, **caractérisé en ce qu'**on détermine une efficacité d'émission avant/arrière que l'on utilise comme critère de comparaison lors de la déduction des caractéristiques dimensionnelles.

9. Procédé selon l'une quelconque des revendications précédentes, **caractérisé en ce qu'**on réalise la déduction des caractéristiques dimensionnelles en comparant les diagrammes d'émissions ainsi élaborés avec des modèles numériques prédéterminés.

10. Procédé selon l'une quelconque des revendications précédentes, **caractérisé en ce que** les différents profils spatiaux comprennent des profils de phase concentriques à symétrie radiale.

**11.** Procédé selon la revendication 10, **caractérisé en ce que** ces profils de phase concentriques sont de type Laguerre-Gaussien, Bessel ou « bottle beam ».

**12.** Procédé selon l'une quelconque des revendications 1 à 9, **caractérisé en ce que** les différents profils spatiaux comprennent des profils de phase antisymétriques radialement.

**13.** Procédé selon la revendication 12, **caractérisé en ce que** ces profils de phase antisymétriques radialement sont de type Hermite-Gaussien.

**14.** Procédé selon l'une quelconque des revendications précédentes, **caractérisé en ce qu'**on réalise un balayage du faisceau laser d'excitation sur ou dans le matériau structuré.

**15.** Procédé selon l'une quelconque des revendications précédentes, **caractérisé en ce que** les caractéristiques dimensionnelles comprennent au moins un élément du groupe suivant : périodicité, distance, et angle.

**16.** Procédé selon l'une quelconque des revendications précédentes, **caractérisé en ce qu'**on élabore différents diagrammes d'émission pour différentes longueurs d'ondes.

**17.** Système de caractérisation dimensionnelle d'un matériau structuré (7) pour la mise en oeuvre du procédé selon l'une quelconque des revendications précédentes, ce système comprenant :

    - une source laser (8) apte à générer un faisceau laser d'excitation adapté à la microscopie non linéaire cohérente ;
    - un modulateur spatial de lumière (11) pour modifier le profil spatial du front d'onde du faisceau laser d'excitation en un profil spatial non gaussien;
    - un objectif (10) pour focaliser ce faisceau laser d'excitation dans un volume focal au sein du matériau structuré ;
    - un détecteur (12, 14) pour détecter des signaux émis par le matériau structuré ; et
    - une unité de traitement (15) pour élaborer une pluralité de diagrammes d'émission correspondant chacune à une forme particulière du volume focal ; les formes particulières étant obtenues pour différents profils spatiaux non gaussien du front d'onde du faisceau laser d'excitation ; et pour déduire des caractéristiques dimensionnelles dudit matériau structuré à partir des diagrammes d'émission ainsi élaborés.

**18.** Système selon la revendication 17, **caractérisé en ce que** le détecteur (12) est disposé de façon à détecter les signaux rétro-diffusés par le matériau structuré.

**19.** Système selon la revendication 17, **caractérisé en ce que** le détecteur (14) est disposé de façon à détecter les signaux en transmission sortant en aval du matériau structuré.

**20.** Système selon l'une quelconque des revendications 17 à 19, **caractérisé en ce que** le détecteur (12) est de type monopoint avec ou sans filtre spatial.

**21.** Système selon l'une quelconque des revendications 17 à 19, **caractérisé en ce que** le détecteur (12) est une caméra.

**22.** Système selon l'une quelconque des revendications 17 à 21, **caractérisé en ce qu'**il comprend un dispositif de balayage (9) pour faire balayer le faisceau laser d'excitation sur le matériau structuré.

**23.** Système selon l'une quelconque des revendications 17 à 22, **caractérisé en ce que** le modulateur spatial de lumière est un dispositif de mise en forme spatiale du front d'onde en phase.

**24.** Système selon la revendication 23, **caractérisé en ce que** le modulateur est une lame de phase.

**25.** Système selon la revendication 23, **caractérisé en ce que** le modulateur est une matrice à cristaux liquide.

**26.** Système selon la revendication 23, **caractérisé en ce que** le modulateur est un miroir déformable.

**27.** Système selon l'une quelconque des revendications 17 à 26, **caractérisé en ce que** le modulateur spatial de lumière est un dispositif de mise en forme spatiale du front d'onde en intensité.

**Patentansprüche**

**1.** Verfahren zur dimensionalen Charakterisierung eines strukturierten Materials (7), bei welchem Verfahren :

    - ein Erregungslaserstrahl erzeugt wird, der für die nichtlineare kohärente Mikroskopie geeignet ist und dessen Wellenfront ein räumliches Profil aufweist, das durch eine Modulationsvorrichtung (11) in Form gebracht wird, wobei dieser Erregungslaserstrahl in einem Fokalvolumen innerhalb des strukturierten Materials fokussiert wird;
    - durch das strukturierte Material ausgesandte Signale erfasst werden,
- eine Vielzahl von Emissionsdiagrammen, die jeweils einer besonderen Form des Fokalvolumens entsprechen, erstellt werden, wobei die besonderen Formen für unterschiedliche nicht-Gaußsche räumliche Profile der Wellenfront des Erregungslaserstrahls erhalten werden, und
- aus den so erstellten Emissionsdiagrammen dimensionale Merkmale des strukturierten Materials abgeleitet werden.

2. Verfahren nach Anspruch 1, **dadurch gekennzeichnet, dass** das räumliche Profil durch Modifizieren der Phase des Erregungslaserstrahls modifiziert wird.

3. Verfahren nach Anspruch 1 oder 2, **dadurch gekennzeichnet, dass** das räumliche Profil durch Modifizieren der Intensität des Erregungslaserstrahls modifiziert wird.

4. Verfahren nach einem der Ansprüche 1 bis 3, **dadurch gekennzeichnet, dass** das räumliche Profil durch Modifizieren der Polarisation des Erregungslaserstrahls modifiziert wird.

5. Verfahren nach einem der vorhergehenden Ansprüche, **dadurch gekennzeichnet, dass** ein Erfassungsdiagramm anhand von durch das strukturierte Material zurückgesandten oder rückgestreuten Signalen erstellt wird.

6. Verfahren nach einem der vorhergehenden Ansprüche, **dadurch gekennzeichnet, dass** ein Erfassungsdiagramm anhand von weitergegebenen Signalen, die nach dem strukturierten Material ausgegeben werden, erstellt wird.

7. Verfahren nach einem der vorhergehenden Ansprüche, **dadurch gekennzeichnet, dass** für ein gleiches räumliches Profil gleichzeitig eine Erfassung von zurückgesandten oder rückgestreuten Signalen und von weitergegebenen Signalen des strukturierten Materials durchgeführt wird.

8. Verfahren nach einem der vorhergehenden Ansprüche, **dadurch gekennzeichnet, dass** eine Vorwärts/Rückwärts-Emissionseffizienz bestimmt wird, die als Vergleichskriterium bei der Ableitung der dimensionalen Merkmale verwendet wird.

9. Verfahren nach einem der vorhergehenden Ansprüche, **dadurch gekennzeichnet, dass** die Ableitung der dimensionalen Merkmale dadurch vollzogen wird, dass die so erstellten Emissionsdiagramme mit vorbestimmten numerischen Modellen verglichen werden.

10. Verfahren nach einem der vorhergehenden Ansprüche, **dadurch gekennzeichnet, dass** die verschiedenen räumlichen Profile radialsymmetrische konzentrische Phasenprofile umfassen.

11. Verfahren nach Anspruch 10, **dadurch gekennzeichnet, dass** diese konzentrischen Phasenprofile vom Typ Gauß-Laguerre, Bessel oder "bottle beam" sind.

12. Verfahren nach einem der Ansprüche 1 bis 9, **dadurch gekennzeichnet, dass** die verschiedenen räumlichen Profile radial antisymmetrische Phasenprofile umfassen.

13. Verfahren nach Anspruch 12, **dadurch gekennzeichnet, dass** diese radial antisymmetrischen Phasenprofile vom Typ Gauß-Hermite sind.

14. Verfahren nach einem der vorhergehenden Ansprüche, **dadurch gekennzeichnet, dass** ein Schwenken des Erregungslaserstrahls über das oder in dem strukturierte(n) Material vollzogen wird.

15. Verfahren nach einem der vorhergehenden Ansprüche, **dadurch gekennzeichnet, dass** die dimensionalen Merkmale wenigstens ein Element aus der folgenden Gruppe umfassen: Periodizität, Distanz und Winkel.

16. Verfahren nach einem der vorhergehenden Ansprüche, **dadurch gekennzeichnet, dass** unterschiedliche Emissionsdiagramme für unterschiedliche Wellenlängen erstellt werden.

17. System zur dimensionalen Charakterisierung eines strukturierten Materials (7), für die Durchführung des Verfahrens nach einem der vorhergehenden Ansprüche, wobei dieses System umfasst:

   - eine Laserquelle (8), die geeignet ist, einen für die nichtlineare kohärente Mikroskopie geeigneten Erregungslaserstrahl zu erzeugen,
   - einen räumlichen Lichtmodulator (11), um das räumliche Profil der Wellenfront des Erregungslaserstrahls in ein nicht-Gaußsches räumliches Profil zu modifizieren,
   - ein Objektiv (10), um diesen Erregungslaserstrahl in einem Fokalvolumen innerhalb des strukturierten Materials zu fokussieren,
   - einen Detektor (12, 14), um durch das strukturierte Material ausgesandte Signale zu erfassen, und
   - eine Verarbeitungseinheit (15), um eine Vielzahl von Emissionsdiagrammen zu erstellen, die jeweils einer besonderen Form des Fokalvolumens entsprechen, wobei die besonderen Formen für unterschiedliche nicht-Gaußsche räumliche Profile der Wellenfront des Erregungslaserstrahls erhalten werden, und um dimensionale Merkmale des strukturierten Materials aus den so erstellten Emissionsdiagrammen abzuleiten.

18. System nach Anspruch 17, **dadurch gekennzeichnet, dass** der Detektor (12) derart angeordnet ist, dass er die durch das strukturierte Material rückgestreuten Signale erfasst.

19. System nach Anspruch 17, **dadurch gekennzeichnet, dass** der Detektor (14) derart angeordnet ist, dass er die weitergegebenen Signale, die nach dem strukturierten Material ausgegeben werden, erfasst.

20. System nach einem der Ansprüche 17 bis 19, **dadurch gekennzeichnet, dass** der Detektor (12) vom Typ Einpunkt-Detektor mit oder ohne Raumfilter ist.

21. System nach einem der Ansprüche 17 bis 19, **dadurch gekennzeichnet, dass** der Detektor (12) eine Kamera ist.

22. System nach einem der Ansprüche 17 bis 21, **dadurch gekennzeichnet, dass** es eine Abtastvorrichtung (9) umfasst, um den Erregungslaserstrahl über das strukturierte Material zu schwenken.

23. System nach einem der Ansprüche 17 bis 22, **dadurch gekennzeichnet, dass** der räumliche Lichtmodulator eine Vorrichtung zum räumlichen Informbringen der Wellenfront hinsichtlich Phase ist.

24. System nach Anspruch 23, **dadurch gekennzeichnet, dass** der Modulator eine Phasenplatte ist.

25. System nach Anspruch 23, **dadurch gekennzeichnet, dass** der Modulator eine Flüssigkristallmatrix ist.

26. System nach Anspruch 23, **dadurch gekennzeichnet, dass** der Modulator ein verformbarer Spiegel ist.

27. System nach einem der Ansprüche 17 bis 26, **dadurch gekennzeichnet, dass** der räumliche Lichtmodulator eine Vorrichtung zum räumlichen Informbringen der Wellenfront hinsichtlich Intensität ist.

**Claims**

1. Method for the dimensional characterization of a structured material (7), in which method:

   - an excitation laser beam suitable for coherent nonlinear microscopy is generated, the wavefront of which has a spatial profile which is shaped by a modulation device (11); this excitation laser beam being focussed in a focal volume within the structured material;
   - signals emitted by the structured material are detected;
   - a plurality of emission patterns, each one corresponding to a particular shape of the focal volume, is produced; the particular shapes being obtained for various non-Gaussian spatial profiles of the excitation laser beam wavefront; and
   - dimensional characteristics of said structured material are deduced from the emission patterns thus produced.

2. Method according to claim 1, **characterized in that** the spatial profile is modified by modifying the phase of the excitation laser beam.

3. Method according to claim 1 or 2, **characterized in that** the spatial profile is modified by modifying the intensity of the excitation laser beam.

4. Method according to any one of the claims 1 to 3, **characterized in that** the spatial profile is modified by modifying the polarization of the excitation laser beam.

5. Method according to any one of the previous claims, **characterized in that** a detection pattern is produced from signals emitted backwards, or backscattered, by the structured material.

6. Method according to any one of the previous claims, **characterized in that** a detection pattern is produced from transmission signals emerging downstream of the structured material.

7. Method according to any one of the previous claims, **characterized in that**, for a same spatial profile, detection of both backward emitted or backscattered signals and transmitted signals of the structured material is carried out.

8. Method according to any one of the previous claims, **characterized in that** a forward/backward emission efficiency is determined, which is then used as a comparison criterion during the deduction of the dimensional characteristics.

9. Method according to any one of the previous claims, **characterized in that** the deduction of the dimensional characteristics is carried out by comparing the emission patterns thus produced with predetermined digital models.

10. Method according to any one of the previous claims, **characterized in that** the different spatial profiles include radially symmetric concentric phase profiles.

11. Method according to claim 10, **characterized in that** these concentric phase profiles are of the Laguerre-Gaussian, Bessel or "bottle beam" type.

12. Method according to any one of claims 1 to 9, **characterized in that** the various spatial profiles include radially antisymmetric phase profiles.

13. Method according to claim 12, **characterized in that** these radially antisymmetric phase profiles are of the Hermite-Gaussian type.

14. Method according to any one of the previous claims, **characterized in that** a scanning with the excitation laser beam over or in the structured material is carried out.

15. Method according to any one of the previous claims, **characterized in that** the dimensional characteristics include at least one item from the following group: periodicity, distance, and angle.

16. Method according to any one of the previous claims, **characterized in that** different emission patterns are produced for different wavelengths.

17. System for the dimensional characterization of a structured material (7) for implementing the method according to any one of the previous claims, this system comprising:

    - a laser source laser (8) able to generate an excitation laser beam suitable for coherent nonlinear microscopy;
    - a spatial light modulator (11) for modifying the spatial profile of the wavefront of the excitation laser beam into a non-Gaussian spatial profile;
    - a lens (10) for focussing this excitation laser beam in a focal volume within the structured material;
    - a detector (12, 14) for detecting signals emitted by the structured material; and
    - a processing unit (15) for producing a plurality of emission patterns each one corresponding to a particular shape of the focal volume; the particular shapes being obtained for different non-Gaussian spatial profiles of the wavefront of the excitation laser beam; and for deducing dimensional characteristics of said structured material from the emission patterns thus produced.

18. System according to claim 17, **characterized in that** the detector (12) is arranged in such a way as to detect the signals backscattered by the structured material.

19. System according to claim 17, **characterized in that** the detector (14) is arranged in such a way as to detect the transmission signals emerging downstream of the structured material.

20. System according to any one of claims 17 to 19, **characterized in that** the detector (12) is of the one-point type with or without a spatial filter.

21. System according to any one of claims 17 to 19, **characterized in that** the detector (12) is a camera.

22. System according to any one of claims 17 to 21, **characterized in that** it comprises a scanning device (9) for making the excitation laser beam scan over the structured material.

23. System according to any one of claims 17 to 22, **characterized in that** the spatial light modulator is a device for the spatial shaping of the wavefront in phase.

24. System according to claim 23, **characterized in that** the modulator is a phase plate.

25. System according to claim 23, **characterized in that** the modulator is a liquid crystal matrix.

26. System according to claim 23, **characterized in that** the modulator is a deformable mirror.

27. System according to any one of claims 17 to 26, **characterized in that** the spatial light modulator is a device for the spatial shaping of the wavefront in intensity.

**Profil spatial du faisceau laser d'excitation**

**Diagrammes d'émission**

**Matériau**

**Structure du matériau**

1

3

2

FIGURE 1

4

5

6

7

FIGURE 2

FIGURE 3

FIGURE 4

FIGURE 5

FIGURE 6

FIGURE 7

FIGURE 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **YEW ; E.Y.S. YEW ; C.J.R. SHEPPARD et al.** Second harmonic generation polarization microscopy with tightly focused linearly and radially polarized beams. *Optics Commun.,* 2007, vol. 275, 453

- **KRISHNAMACHARI ; V.V. KRISHNAMACHARI ; E.O. POTMA et al.** Imaging chemical interfaces perpendicular to the optical axis with focus-engineered coherent anti-Stokes Raman scattering microscopy. *Chemical Physics,* 2007